# FASCICULE DE BREVET EUROPEEN

(11) **EP 0 618 746 B1**
(45) Date de publication et mention de la délivrance du brevet: **24.06.1998**
(21) Numéro de dépôt: 94400673.3
(22) Date de dépôt: 29.03.1994
(51) Int. Cl.: H04Q 7/32

(54) **Station d'un réseau de radiocommunication numérique à moyens d'échange de signaux de parole et moyens d'échange de signaux de données**
Einrichtung eines digitalen Funkkommunikationsnetzes mit Mitteln um Sprachsignale und Daten auszutauschen
Station for a digital radio-communication network with means for exchanging speech signals and means to exchange data signals

(30) Priorité: 31.03.1993 FR 9303765
(43) Date de publication de la demande: 05.10.1994
(73) Titulaire: ALCATEL ALSTHOM COMPAGNIE GENERALE D'ELECTRICITE, 75008 Paris (FR)
(72) Inventeur: Jouin, Christophe, F-92270 Bois Colombes (FR); Pinault, Francis, F-92270 Bois Colombes (FR); Grebot, Richard, F-75012 Paris (FR)
(74) Mandataire: Pothet, Jean Rémy Emile Ludovic

(56) Documents cités:
- WO-A-91/18483
- WO-A-92/22976
- GB-A- 2 259 431

## Description

Le domaine de l'invention est celui de la radiocommunication numérique. Plus précisément, l'invention concerne les échanges de données numériques par l'intermédiaire d'un système de radiocommunication, de façon à permettre, par exemple, les échanges entre deux équipements terminaux de traitement de données (ETTD), l'un au moins étant mobiles.

On sait déjà faire communiquer entre eux deux ETTD à l'aide d'une liaison filaire (telle que le réseau téléphonique commuté). Dans ce cas, chacun des ETTD coopère avec un modem asynchrone, en général conforme à la norme V24 et à un protocole modem (par exemple du type du protocole "Hayes" (marque déposée)). Ces normes définissent une interface entre un ETTD et un équipement terminal de circuit de données (ETCD), ou modem.

On connaît plusieurs systèmes de radiocommunication numérique, et notamment le système cellulaire européen GSM (Groupe Spécial Mobile). Les systèmes de radiocommunication cellulaires reposent sur la division d'un territoire géographique en petites portions, ou cellules, desservies chacune par un ou plusieurs stations de base. Ce découpage en cellules permet d'optimiser l'utilisation du spectre radioélectrique, plusieurs cellules pouvant utiliser la même portion de spectre.

En revanche, cette approche cellulaire pose plusieurs problèmes, du point de vue de la gestion des communications, en particulier lorsqu'un mobile change de cellules ("handover" en anglosaxon). D'autres contraintes spécifiques existent, dans le cas du système GSM, telles que les redéfinitions du plan de fréquences ("frequency redefinition"), l'utilisation de la technique du saut de fréquences, ...

Il a également été défini une autre norme, la norme V110, pour la connexion d'un ETTD sur un réseau numérique avec intégration de services (RNIS). Cette norme a été adaptée aux spécificités du système GSM. Ainsi, un ETCD peut communiquer via le système GSM.

Cependant, les ETTD classiques portables (micro-ordinateurs,...) ne sont pas équipés pour communiquer selon la norme V110, mais connaissent seulement les modems. La connexion de ces ETTD sur un réseau de radiodiffusion cellulaire n'est alors pas possible.

Par ailleurs, l'utilisation d'un réseau cellulaire est généralement liée à la notion de mobilité, et par conséquence de limitation de l'encombrement et des connexions entre appareils. En conséquence, la mise en oeuvre d'un dispositif spécialisé d'adaptation telle que décrite par exemple dans WO-A-92/22976 n'est pas une solution acceptable.

L'invention a pour objectif de présenter une solution à ces problèmes. Plus précisément, un objectif de l'invention est de fournir des moyens permettant une connexion aisée d'un ETTD classique sur un réseau cellulaire.

Un autre objectif de l'invention est également de fournir de tels moyens, permettant de recevoir alternativement des signaux de données et des signaux de parole.

Ces objectifs, ainsi que d'autres qui apparaîtront par la suite, sont atteints selon l'invention à l'aide d'une station d'un réseau de radiocommunication numérique permettant d'une part des échanges de signaux de parole et d'autre part des signaux de données, comprenant :
- des moyens de connexion à un premier équipement terminal de traitement de données permettant des échanges bidirectionnels de données selon un premier standard d'échange de données, ledit premier standard de données mettant en oeuvre un canal de transfert unique acheminant à la fois des données et des commandes,
- des premiers moyens d'émission et de réception de données vers un second équipement terminal de traitement de données via ledit réseau de radiocommunication, selon un second standard d'échange de données mettant en oeuvre d'une part un canal de transfert de données et d'autre part un canal de transfert de commande,
- des seconds moyens d'émission et de réception de signaux de parole vers un terminal distant via ledit réseau de radiocommunication, selon un troisième standard d'échange de données, et
- des moyens de contrôle d'une communication bidirectionnelle entre ladite station et un terminal distant comprenant :
- des moyens de sélection entre lesdits premiers et lesdits seconds moyens d'émission et de réception, selon que ladite communication porte des données ou un signal de parole,
- des moyens d'interfaçage entre ledit premier et ledit second standard d'échange de données comprenant :
   * dans le sens du premier standard vers le second standard :
      - des moyens de séparation des données et des commandes délivrées par ledit premier équipement terminal,
      - des premiers moyens de transcodage desdites données délivrées par lesdits moyens de séparation, dudit premier standard vers ledit second standard, délivrant des données à transmettre sur ledit canal de transfert de données,
      - des premiers moyens de tri desdites commandes en deux jeux de commandes, un premier jeu de commandes étant destiné à être transmis vers ledit second équipement terminal et un second jeu de commandes étant destiné à être exploité par ladite station,
      - des moyens d'interprétation des commandes dudit second jeu de commandes, délivrant un second jeu de commandes interprétées,
      - des premiers moyens de mappage des commandes dudit premier jeu de commandes, délivrant des commandes à transmettre sur ledit canal de transfert de commandes,
   * dans le sens du second standard vers le premier standard :
      - des seconds moyens de tri des commandes reçues sur ledit canal de transfert de commandes, délivrant un troisième jeu de commandes destiné à être transmis audit premier équipement terminal et un quatrième jeu de commandes destiné à être exploité par ladite station,
      - des seconds moyens de mappage des commandes dudit troisième jeu de commandes, délivrant des commandes à transmettre audit premier équipement terminal,
      - des seconds moyens de transcodage des données reçues sur ledit canal de transfert de données dudit second standard vers ledit premier standard, délivrant des données à transmettre audit premier équipement terminal,
      - des moyens de regroupement desdites commandes et desdites données à transmettre audit premier équipement terminal, de façon à les transmettre par l'intermédiaire dudit canal de transfert unique, et
   * des moyens de supervision de ladite communication, à partir dudit second jeu de commandes interprétées et dudit quatrième jeu de commandes, assurant notamment l'initialisation, le suivi et l'interruption de ladite communication.

Ainsi, la station de l'invention permet d'assurer alternativement des échanges de données et des échanges de parole. Les échanges de données sont gérées par la station, sans équipement complémentaire externe.

Avantageusement, lesdits moyens de supervision génèrent des commandes destinées à être transmises sur ledit canal de transfert unique et/ou sur ledit canal de transfert de commandes, en fonction dudit second jeu de commandes interprétées, dudit quatrième jeu de commandes et d'informations externes.

De façon préférentielle, lesdits moyens de sélection sélectionnent par défaut lesdits seconds moyens d'émission et de réception de signaux de parole, et lesdits premiers moyens d'émission et de réception de données sont sélectionnés sur réception d'une demande de connexion émise par ledit premier ou ledit second équipement terminal.

Par ailleurs, lesdits moyens de sélection peuvent assurer l'émission d'une instruction spécifique de validation/invalidation de certains modules de ladite station, lorsque lesdits premiers moyens d'émission et de réception de données sont sélectionnés. Par exemple, ladite instruction spécifique de validation/invalidation assure l'invalidation d'au moins certaines touches d'un clavier.

Dans un mode de réalisation avantageux de l'invention :
- ledit premier standard de données est la norme V24 associé à un protocole modem ;
- ledit second standard de données est la norme V110 ;
- ledit réseau de radiocommunication numérique est un réseau GSM.

De façon avantageuse, ladite station comprend des moyens de sélection entre au moins deux débits de données distincts pour les échanges de données selon ledit premier standard de données.

Dans ce cas, elle peut comprendre également des moyens d'adaptation du format des données échangées selon ledit second standard de données, en fonction dudit débit sélectionné.

Dans un mode de réalisation avantageux de l'invention, la station comprend des moyens de contrôle des flux émis et/ou reçues par ladite station, permettant d'éviter les cas "d'engorgement".

Préférentiellement, lesdits premiers moyens de tri délivrent un cinquième jeu de commandes, destiné à configurer ladite station aux besoins dudit premier équipement.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :
- la figure 1 présente schématiquement le principe de l'invention, comprenant une station mobile permettant d'assurer des communications en mode données et en mode parole ;
- la figure 2 est un schéma fonctionnel des moyens d'interfaçage de la station de la figure 1;
- la figure 3 est un diagramme fonctionnel présentant la structure du programme gérant les moyens d'interfaçage de la figure 2.

Le mode de réalisation préférentiel décrit ci-dessous a pour but de permettre la connexion entre deux ETTD 11 et 12 (par exemple des micro-ordinateurs, des téléstations,...), dont l'un au moins (11) est mobile et capable d'échanger des données (13) conformément à la norme V24 (également désignée par RS232) et à un protocole modem (ou, plus généralement, à toute standard d'échange de données mettant en oeuvre un canal unique de transfert, acheminant des données et des commandes).

L'ETTD mobile 11 communique (14) avec l'autre ETTD 12 (ETTD distant, qui peut également être mobile) via le réseau de radiocommunication GSM, qui offre deux canaux distincts :
- un canal de transfert de données 15 ;
- un canal de transfert de commandes 16.

La station mobile (ou ETCD) 17 selon l'invention permet :
- d'une part (classiquement) des échanges (19, 110) de paroles avec un terminal de paroles distant 18, à l'aide d'un module 111 de gestion des échanges de paroles, et
- d'autre part des échanges de données entre deux ETTD, à l'aide d'un module 112 de gestion des échanges de données, assurant l'interfaçage entre l'ETTD 11 et le réseau GSM (c'est-à-dire jouant le rôle de modem). La plupart des ETTD sont équipés de moyens de communication V24. Ainsi, selon l'invention, le passage par le réseau radionumérique est transparent pour l'ETTD, et il n'est pas nécessaire d'équiper l'ETTD d'un adaptateur.

Un module de sélection 113 sélectionne l'un des deux modules d'échange 111 ou 112. Le module d'échange de paroles 111 est sélectionné par défaut. Le module d'échange de données 112 est sélectionné sur réception d'une demande de connexion issue de l'un des deux ETTD 11 ou 12.

La station mobile 17 selon l'invention présente donc deux caractéristiques essentielles, à savoir :
- la possibilité de sélectionner le mode paroles ou le mode données. Ainsi, un même appareil, de taille réduite, permet d'assurer ces deux fonctions, de façon quasi transparente pour l'utilisateur. Le gain en encombrement et l'absence de moyens d'interfaçage externe, et donc de nombreuses connexions est essentiel, dans le cadre d'une application mobile ;
- l'interfaçage entre deux standards totalement différents, nécessitant notamment une analyse spécifique de chaque commande (incluant la distinction entre les commandes ayant trait au dialogue entre les deux ETTD et celles ayant trait à la communication au niveau GSM).

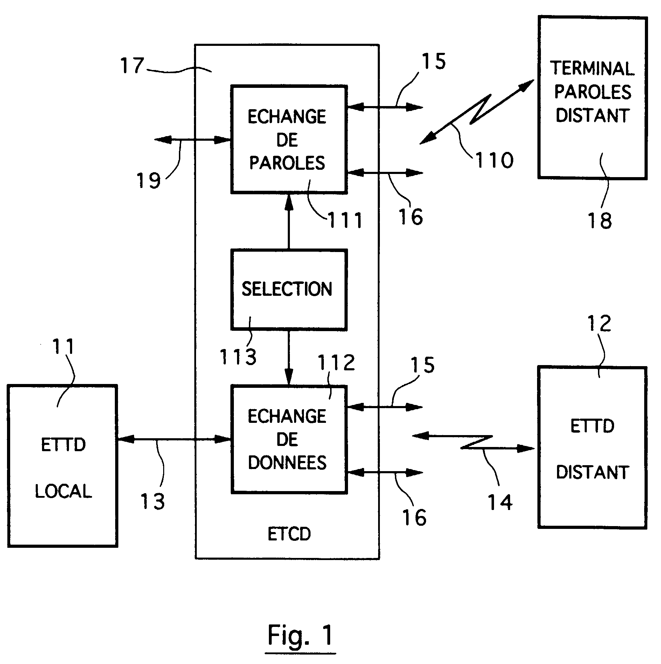

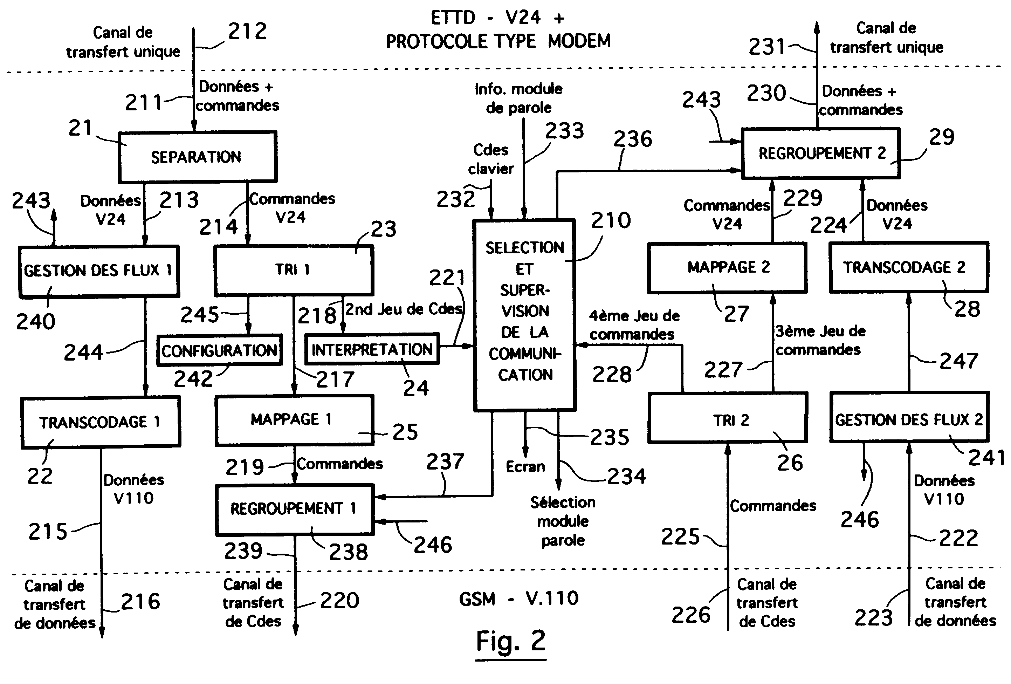

La figure 2 présente plus en détail l'interfaçage réalisé selon l'invention dans le module 112 de la figure 1.

Les données et commandes 211 reçues de L'ETTD local sur un canal de transfert unique 212 (norme V24 + protocole modem (par exemple un protocole dérivé du protocole "Hayes" (marque déposée)) sont dirigées vers un module de séparation 21 qui délivre d'une part des données V24+protocole modem 213 et d'autre part des commandes V24+protocole modem 214.

Les données 213 sont transmises à un premier module 240 de gestion des flux qui contrôle que les données 213 ne sont pas délivrées à un rythme supérieur à celui que peut accepter la station (pour éviter le risque d'engorgement, si l'ETTD émet trop rapidement).

Si le rythme est trop élevé, une information 243 est émise vers l'ETTD. Sinon, les données sont transmises (244) vers un module de transcodage 22, qui transforme les données V24+ protocole modem en des données 215 au format V110 (avec notamment un regroupement des données en trames). Ces données 215 sont ensuite transmises vers l'ETTD distant, via le canal de transfert de données 216 du réseau GSM.

Les commandes 214 sont traitées par un premier module de tri 23, qui distingue trois jeux de commandes :
- un premier jeu de commandes 217, qui comprend des commandes destinées à l'ETCD distant (par exemple une demande de répétition),
- un second jeu de commandes 218, comprenant des commandes destinées à un module de supervision de la communication 210 (par exemple une interruption de communication), et
- un cinquième jeu de commandes 245 (les troisième et quatrième jeux étant définis par la suite), destiné à un module de configuration 242, qui configure la station en fonction des caractéristiques de l'ETTD.

Bien sûr, certaines commandes peuvent être incorporées dans les deux jeux de commandes 217 et 218.

Le premier jeu de commandes 217 est soumis à un mappage 25, qui adapte le format des commandes 217 (V24+protocole modem) à un format compatible 219 avec le canal de transfert de commandes GSM 220. Le second jeu de commandes 218 est interprété par un module d'interprétation 24 qui délivre au module de supervision 210 des commandes 221 qu'il peut interpréter.

Dans l'autre sens de communication, la procédure est sensiblement symétrique.

Les données 222 au format V110 reçues sur le canal de transfert de données 223 sont transmises à un second module 241 de gestion des flux qui contrôle que les données 222 ne sont pas délivrées à un rythme supérieur à celui que peut accepter la station.

Si le rythme est trop élevé, une information 246 est émise sur le canal de transfert de commandes. Sinon, les données (247) vers subissent un transcodage 28, de façon à produire des données 224 au format V24+protocole modem.

Les commandes 225 reçues sur le canal de transfert de commandes 226 sont soumises à un tri 26, qui distingue :
- un troisième jeu de commandes 227 destinées à l'ETTD local, et
- un quatrième jeu de commandes 228 destinées au module de supervision 210.

A nouveau, certaines commandes peuvent être incorporées dans les deux jeux de commandes.

Le jeu de commandes 227 est délivré à un module de mappage 27, qui produit des commandes 229 correspondantes, au format V24+protocole modem. Le jeu de commandes 228 est délivré directement au module de supervision.

Les données 223 et commandes 229 au format V24+protocole modem sont regroupées (29), de façon à former un ensemble 230 de données et de commandes délivré sur le canal de transfert unique 231 vers l'ETTD. Le module de regroupement 29 reçoit également la commande 243 émise par le premier module de gestion des flux 240.

Le module de supervision assure le suivi de la communication, au niveau GSM. Il assure les début, suivi et fin de communications, avec notamment opérations classiques du GSM, telles que les changements de cellules ("handover"), les redéfinitions de fréquences, etc...

Outre les commandes 221 et 228, il peut tenir compte de commandes externes, telles que celles 232 issues du clavier de la station. Il peut également recevoir des informations 233 du module d'échange de paroles 111 (figure 1), par exemple pour gérer les conflits entre deux demandes de connexion paroles et données. Il peut également assurer le rôle du module 113 de sélection, en émettant une commande 234 de validation/invalidation du module d'échange de paroles (ainsi que, éventuellement, des commandes spécifiques, par exemple pour invalider le clavier lorsqu'un échange de données est en cours).

Ce module de supervision peut encore émettre des messages 235 vers un écran, pour le suivi de la communication en cours.

Enfin, le module de supervision peut générer de lui-même des commandes destinées à l'un ou l'autre des ETTD, lorsque cela est nécessaire :
- les commandes 236 destinées à l'ETTD local sont transmises au module de regroupement 29 ;
- les commandes 237 destinées à l'ETTD distant, ou au réseau GSM, sont transmises à un second module de regroupement 238, qui délivre des commandes 239 au canal de transfert de commandes 220.

Le second module de regroupement 238 reçoit également la commande 246 émise par le second module de gestion des flux 241.

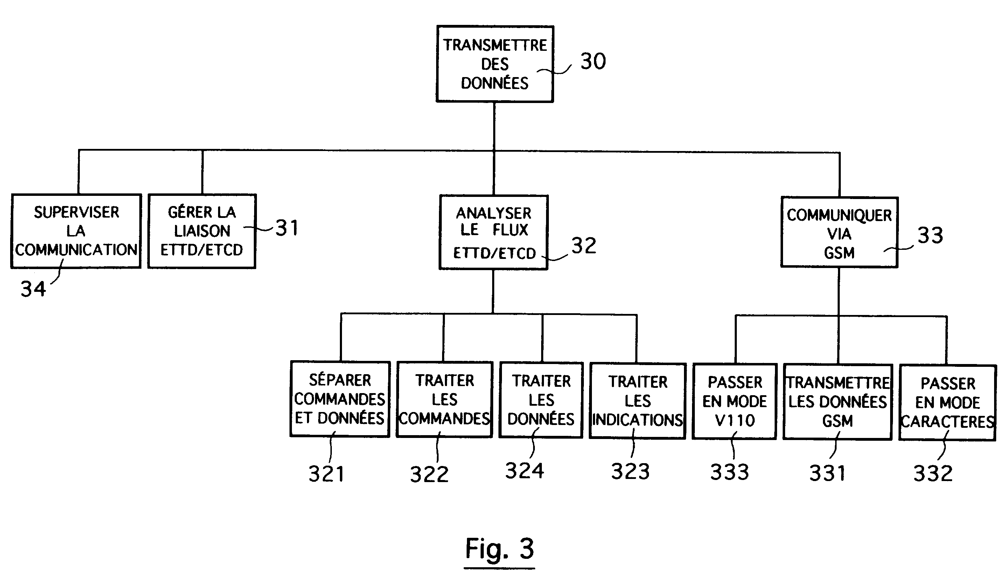

Ces différents moyens peuvent être regroupés dans la station mobile sous une forme logicielle. La figure 3 présente un diagramme fonctionnel illustrant la structure d'un programme gérant ces moyens d'interfaçage.

La fonction de base 30 "transmettre des données" peut se décomposer en quatre fonctions principales (niveau 0) :
- 1) gérer la liaison ETTD-ETCD (31)
- 2) analyser le flux ETTD-ETCD (32)
- 3) communiquer via GSM (33)
- 4) superviser la communication (34).

Ces fonctions se décomposent de la façon suivante :

### 1) gérer la liaison ETTD-ETCD (31)

Cette liaison ETTD-ETCD est du type normalisé RS232C.

### 2. Analyser le flux ETTD-ETCD (32)

### 2.1. Fonction "Séparer les commandes des données" (321)

Cette fonction redirige les données provenant de la fonction GERER LA LIAISON ETTD/ETCD (31) vers les fonctions terminales TRAITER LES COMMANDES (322) ou TRAITER LES DONNEES (324).

La séparation des commandes et des données s'opère suivant deux modes mutuellement exclusifs :
- Le mode commande :
   Les caractères provenant de la fonction GERER LA LIAISON ETTD/ETCD (31) sont stockés un par un dans une chaîne de commande jusqu'à interprétation possible de cette chaîne entraînant un passage en mode donnée.
- Le mode donnée :
   Les caractères provenant de la fonction GERER LA LIAISON ETTD/ETCD (31) sont stockés dans une chaîne de données jusqu'à interprétation possible de cette chaîne entraînant un passage en mode commande.

Le passage du mode commande en mode donnée est défini tel que :
- Le mode commande est le mode par défaut à l'initialisation d'une communication de donnée.
- Dans le cas d'une communication initialisée par l'ETTD, le passage en mode de donnée se fait lors de l'interprétation d'une commande spécifique.
- Dans le cas d'une communication initialisée par le mobile, la "demande de communication" est envoyée à la couche de supervision après un nombre de sonnerie spécifié.
- Le retour en mode commande est réalisé sur trois réceptions consécutives du caractère défini dans un registre.
- Le retour en mode commande est automatique en cas "d'indication de fin de communication" par le bloc SUPERVISER LA COMMUNICATION (34).

### 2.2. Fonction "Traiter les commandes de l'ETTD" (322)

Cette fonction assure l'interprétation des caractères provenant de la fonction SEPARER COMMANDES/DONNEES (331).

Le traitement des commandes utilise quatre types de données :
- Les commandes :
   Elles transitent de l'ETTD vers l'ETCD soit sous forme de signaux (le 108/2, "terminal non prêt", est donc considéré comme une commande) soit sur forme de caractères interprétables. Ces caractères constituent un sous-ensemble des commandes modem classiques.
- Les informations :
   Elles transitent de l'ETCD vers l'ETTD soit sous forme de signaux, soit sous forme de caractères encadrées par une chaîne <CR> <LF> ou de codes spécifiques.
- Les indications de résultat :
   Elles transitent de l'ETCD vers l'ETTD sous forme de caractères encadrées par une chaîne <CR> <LF> ou de codes spécifiques.
- L'écho :
   L'écho correspond au renvoi des caractères reçus en mode commande.

La fonction est activée par la fonction SEPARER LES DONNEES (321) qui l'appelle à chaque ligne de commande valide. L'interprétation se fait alors commande par commande. Pour chaque commande, l'interpréteur attend si nécessaire une indication du bloc SUPERVISER LA COMMUNICATION (34). Eventuellement, il enverra à l'ETTD les informations et/ou les indications de résultat relatives à la commande interprétée. Une ligne de commande correctement exécutée provoque l'émission de l'indication "OK" vers l'ETTD. Dès qu'une commande de la ligne n'a pu être interprétée ou exécutée, le reste de la ligne est ignoré et une indication "ERROR" est retournée.

La fonction est désactivée lors du passage en mode de donnée après avoir interprétée la totalité de la ligne de commande en cours ou sur réception d'une "indication de fin de communication".

### 2.3. Fonction "Traiter les indications" (323)

Cette fonction terminale fait partie du bloc ANALYSER LE FLUX ETTD/ETCD (32). Elle gère les indications provenant de la fonction TRAITER LES DONNEES (324) (322) et du bloc fonctionnel SUPERVISER LA COMMUNICATION (34) et assure la propagation de ces indications vers les fonctions SEPARER COMMANDES/DONNEES (321), TRAITER LES COMMANDES (322), TRAITER LES DONNEES (324) (324) et vers le bloc GERER LA LIAISON ETTD/ETCD (31).

Les traitements sont spécifiques aux indications :
- "Demande d'initialisation" du bloc SUPERVISER LA COMMUNICATION (34).
- "Initialisation" vers SEPARER COMMANDES/DONNEES (321), TRAITER LES COMMANDES (322), TRAITER LES DONNEES (324) (324) et vers le bloc GERER LA LIAISON ETTD/ETCD (31).
- "Indication de connexion de TRAITER LES DONNEES (324).
- "Indication de déconnexion" de TRAITER LES DONNEES (324).
- "Indication de déconnexion" vers TRAITER LES DONNEES (324).
- "Confirmation de déconnexion" de TRAITER LES DONNEES (324).
- "Indication d'appel entrant" du bloc SUPERVISER LA COMMUNICATION (34).
- "Indication de communication établie" du bloc SUPERVISER LA COMMUNICATION (34).
- "Indication de fin de communication" du bloc SUPERVISER LA COMMUNICATION (34).

### 2.4. Fonction "Traiter les données" (324)

Cette fonction assure la gestion des données niveau caractère ainsi que la gestion des bits de commandes des trames V110 aussi bien vers l'ETTD que vers le GSM.

Elle permet la gestion des flux de données ETCD - GSM sous forme caractères. Les flux de données sont effectifs uniquement dans le mode de fonctionnement nominal de la fonction.

Contrôle de flux sens ETCD -> GSM :
- La fonction TRAITER LES COMMANDES (322) envoie une requête de "Demande de connexion" pour demander à passer dans la phase de "Transmission de données".
- La fonction TRAITER LES COMMANDES (322) envoie une requête de "Demande de déconnexion" pour demander un arrêt de transmission de données.

### Contrôle de flux sens GSM -> ETCD :

L'état des bits de commande en réception sont fournis par la fonction PASSAGE EN MODE CARACTERES (332). La fonction filtre les temps d'établissement de ces bits de contrôle.

La phase de "Repos" est positionnée au cours du processus d'initialisation du mobile.

La classe de débit utilisé est fournie par la fonction TRAITER LES COMMANDES (322) durant cette phase. Les débits asynchrones autorisés sont : 2400b/s, 4800b/s et 9600b/s.

La structure des caractères (bit de start, nombre de bits de données, bit de parité, nombre de bits de stop) est donnée par la fonction TRAITER LES COMMANDES (322).

### Phase de Repos :

La phase de "Repos" permet de refuser tout transfert de données.

La fonction se trouve dans cette phase soit à la suite d'un processus d'initialisation, soit à la suite d'une phase de déconnexion suivant un arrêt de transfert de données local ou distant.

### Phase de Connexion

- La fonction entre dans cette phase fonctionnement sur réception d'une requête de "Demande de connexion" de la fonction TRAITER LES COMMANDES (322).
- La fonction demande aux fonctions PASSAGE EN MODE V110 (333) et PASSAGE EN MODE CARACTERES (332) de passer dans leur phase de connexion.

### Phase de Transfert de données :

Cette phase fait suite soit à une phase de connexion réussie, soit à une phase de déconnexion V110 interrompue.

### Phase de Déconnexion

La fonction passe dans cette phase de fonctionnement dans plusieurs cas :
- Déconnexion réseau
- Déconnexion locale
- Déconnexion V110.

### 3. Communiquer via GSM (33)

### 3.1. Fonction "Transmission des données GSM" (331)

Le logiciel C1 GSM concerné par l'application "Transmission de données" se limite à trois fonctions :
- l'initialisation de la C1 GSM en mode communication de données,
- les échanges sur le canal TCH/9600, TCH/4800 ou TCH/2400,
- les échanges sur le canal de trace.

Ces fonctions doivent être transparentes pour les autres applications du mode communication.

### Mode communication en multitrame à 26 trames

Le mode de communication de la C1 GSM est établi sur allocation d'un canal TCH par le réseau (Immediate assignment).

La communication "parole" ou "données" est connue de la C3 GSM, celle-ci doit configurer le passage de la C1 GSM dans le mode "transmission de données" par une information spécifique.

Une fois établi, le mode transfert de parole assure :
- la transmission des blocs TCH/FS
- la transmission d'un "burst" de signalisation toutes les 26 trames (pour la gestion de la qualité de la communication)
- la surveillance des cellules voisines pendant la trame "idle" (en vue d'un "handover")
- la transmission de blocs FACCH par vol de trame TCH
- le moyennage du niveau de réception du signal
- la gestion du saut de fréquence
- le chiffrement de la communication
- le contrôle des entités physiques.

Toutes les fonctions C1 GSM sont conservées pour l'application Téléstation de l'invention, mais on y ajoute :
- la transmission des blocs TCH/9600
- la transmission des blocs TCH/4800
- la transmission des blocs TCH/2400
- les échanges avec le canal de trace.

Les blocs reçus sur la voie radio doivent être transmis sur le canal de trace de manière synchrone et transparente pour la C1, et réciproquement.

Les interfaces sont :
- Canal TCH/9600 : on transmet ensemble 4 paquets de 60 bits.
- Canal TCH/4800 : on transmet ensemble 2 paquets de 60 bits.
- Canal TCH/2400 : on transmet ensemble 2 paquets de 36 bits.

Par ailleurs, la station assure :
- la conservation du code existant pour toutes les autres fonctions du mode communication :
   * hopping
   * handover
   * redéfinition de fréquences...
- la gestion différente des entités physiques :
   * EP4 (traitement de la parole) n'est pas utilisé pour la transmission de données.
   * EP3 (traitement des données) doit être connecté via le canal de trace pour émettre et recevoir les données de l'application Téléstation.

### 3.2. Fonction "Passage en mode caractère" (332)

Cette fonction réalise le passage du mode V.110 au mode caractère, du flux de données provenant du réseau GSM et à destination de la téléstation.

Une trame V.110 contient :
- soit 36 bits dans le cas d'un débit asynchrone de 2400b/s.
- soit 60 bits dans le cas des débits asynchrones de 4800b/s ou 9600b/s, pour ces 2 classes de débits la structure de la trame est identique.

Cette fonction reçoit des blocs de taille et de structure dépendant de la classe de débit en vigueur.
- Chaque bloc se décompose en trames V.110 consécutives de la manière suivante :
   * débit asynchrone 2400b/s : 72 bits soit 2 trames V.110 de 36 bits
   * débit asynchrone 4800b/s : 120 bits soit 2 trames V.110 de 60 bits
   * débit asynchrone 9600b/s : 240 bits soit 4 trames V.110 de 60 bits.

Au cours de la phase de "Transfert de données", il faudra procéder à l'extraction des caractères contenus dans toutes les trames V.110. L'extraction se fera caractère par caractère en se calant sur les bits de start. Les caractères seront mémorisés dépouillés (sans leurs bits de start et de stop). Dans le cas ou le dernier caractère du bloc est incomplet (c'est-à-dire à cheval entre ce bloc et le suivant), il faudra mémoriser la partie reçue et attendre l'arrivée du bloc suivant pour compléter.

### 3.3. Fonction "Passage en mode V.110" (333)

Cette fonction réalise le passage du mode caractère au mode V.110 du flux de données provenant de la téléstation et à destination du réseau GSM.

La structure des blocs à émettre (nombre et structure des trames V.110) vers la fonction TRANSMETTRE DONNEES GSM (331) dépend de la classe de débit en vigueur.

Cette fonction permet la récupération du flux de données en mode caractère provenant de la fonction TRAITER LES DONNEES (324). Ces données sont stockées par la fonction TRAITER LES DONNEES (324). Ces données sont acheminées via la liaison SPI à destination de la fonction TRANSMETTRE LES DONNEES GSM (331) sous forme de trames V.110.

La récupération des caractères stockés par la fonction TRAITER LES DONNEES comprend les opérations suivantes :
- Le bit de start et les bits de stop sont ajoutés à chaque caractère récupéré, conformément au format des caractères en vigueur au niveau des trames V.110 ;
- Ces caractères sont placés consécutivement (sans bit de bourrage) au sein des trames V.110 constituant le bloc en cours de préparation ;
- Le nombre total de bits réservés aux données dans les blocs de trames V.110 dépend du débit en vigueur (2 x 24 = 48 bits pour 2400 b/s, 48 bits pour 4800 b/s, 4 x 48 = 192 bits pour 9600 b/s) ;
- Dans le cas de survitesse de la part de l'ETTD, il est possible de compenser jusqu'à 1% en supprimant au maximum 1 bit de stop tous les 8 caractères ;
- Lorsque le nombre de caractères stockés par la fonction TRAITER LES DONNEES est inférieur à la capacité de la série de trames en cours, les bits de données restant sont des bits de bourrage.

Le bloc de trames V.110 est ensuite émis vers la fonction TRANSMETTRE LES DONNEES GSM.

### 4. "SUPERVISER LA COMMUNICATION" (34)

Le but de cette fonction est, comme son nom l'indique, de SUPERVISER LA COMMUNICATION (34) entre l'ETTD connecté au mobile et un ETTD distant. Elle consiste en la gestion de l'établissement, de la maintenance puis de la libération d'une communication, qu'elle soit entrante ou sortante.

Cette fonction ajoute au logiciel classique la prise en compte et la gestion d'un Terminal de Donnée en plus du Terminal d'Exploitation.

La supervision d'une communication en mode donnée est très proche de la supervision d'une communication en mode parole. Elle se différencie par le rôle et la fonction de chacun des terminaux.
- En mode Parole
   Toute demande de l'ETTD est rejetée.
- En mode Donnée
   Les phases d'établissements et de déconnexion (Call Control) sont identiques à celles du mode parole, la gestion du S.I.M et de la mobilité (Mobility Managment) aussi.

### ∗Appel sortant :

L'ETTD fait une demande accompagnée du numéro à composer, la phase d'établissement de la communication (tant que la communication n'est pas établie) est identique à celle de l'appel en mode parole, la demande est comprise comme une demande de communication en main libre de façon à générer les tonalités dans le haut-parleur externe. La station reste donc active et les appui-touches sont pris en compte.

### ∗ Appel entrant :

Sur réception d'un appel entrant en mode donnée, l'ETTD est prévenu et peut accepter ou non l'appel. La phase d'établissement de la communication (tant que la communication n'est pas établie...) est identique à celle de l'appel en mode parole, le T.E (station) reste donc actif et les appui-touches sont pris en compte.

Dès que la communication est établie, le T.E devient inactif et les appui-touches sont ignorés.

Par ailleurs, la fonction SUPERVISER LA COMMUNICATION (34) doit maintenant accepter les appels en mode donnée asynchrone transparent à 2400, 4800 et 9600 bits/seconde (gestion de la comptabilité de l'appel entrant).

### ∗ L'Appel Sortant.

Sur réception d'une "demande de communication en mode donnée" venant de l'ETTD, la fonction SUPERVISER LA COMMUNICATION (34) si le mobile est localisé et si un SIM est bien présent, effectue une "demande de connexion au réseau".

On attend alors que toutes les conditions suivantes soient établies pour passer en communication :
- le correspondant doit avoir décroché,
- un canal doit nous être alloué pour communiquer,
- la communication est établie de bout en bout.

A tout moment, une "demande de fin de communication" peut être faite par le réseau ou la fonction ANALYSER FLUX ETTD-ETCD (32). De même un retrait du SIM ou un appui sur la touche arrêt du poste conduiront à une fin de communication.

Si une demande d'appel entrant ("demande de communication en mode donnée" venant du réseau) est reçue pendant l'établissement d'une communication sortante, celle-ci est abandonnée.

### ∗ L'Appel Entrant.

Sur réception d'une "demande de communication en mode donnée" venant du réseau, on procède à une vérification de la comptabilité entre le type de communication demandé et le type de communication accepté par le mobile (communication de type asynchrone en mode transparent à 2400, 4800 ou 9600 bits/s).

Une fois la communication établie, le T.E. affiche un message indiquant que la communication est établie en mode donnée, tous les appui-touches (sauf la demande d'arrêt du poste) sont ignorés, les audio sont éteints.

On se met en attente d'une confirmation de déconnexion venant du réseau, les appui-touches sont alors à nouveau autorisés.

Ainsi, le logiciel permet l'établissement puis le maintien et la libération d'une communication entre deux ETTD dont un au minimum est connecté à un mobile GSM utilisé comme "modem".

La communication se fera en mode asynchrone transparent à 2400, 4800 ou 9600 bits/seconde selon la capacité du réseau à les gérer.

Les mobiles équipés de ce logiciel devront être à même de communiquer en mode parole à l'aide d'un T.E ou en mode données exclusif en présence d'un ETTD connecté.

## Revendications

1. Station d'un réseau de radiocommunication numérique permettant d'une part des échanges de signaux de parole et d'autre part de signaux de données, caractérisée en ce qu'elle comprend :
- des moyens de connexion à un premier équipement terminal de traitement de données (11) permettant des échanges bidirectionnels de données selon un premier standard d'échange de données, ledit premier standard de données mettant en oeuvre un canal de transfert unique acheminant à la fois des données et des commandes,
- des premiers moyens d'émission et de réception de données (112) vers un second équipement terminal de traitement de données via ledit réseau de radiocommunication, selon un second standard d'échange de données mettant en oeuvre d'une part un canal de transfert de données et d'autre part un canal de transfert de commande,
- des seconds moyens d'émission et de réception de signaux de parole (111) vers un terminal distant via ledit réseau de radiocommunication, selon un troisième standard d'échange de données, et
des moyens de contrôle d'une communication bidirectionnelle entre ladite station et un terminal distant comprenant :
- des moyens (113, 210) de sélection entre lesdits premiers et lesdits seconds moyens d'émission et de réception, selon que ladite communication porte des données ou un signal de parole,
- des moyens d'interfaçage entre ledit premier et ledit second standard d'échange de données comprenant :
* dans le sens du premier standard vers le second standard :
- des moyens (21) de séparation des données et des commandes délivrées par ledit premier équipement terminal,
- des premiers moyens (22) de transcodage desdites données délivrées par lesdits moyens de séparation, dudit premier standard vers ledit second standard, délivrant des données à transmettre sur ledit canal de transfert de données,
- des premiers moyens (23) de tri desdites commandes en deux jeux de commandes, un premier jeu de commandes étant destiné à être transmis vers ledit second équipement terminal et un second jeu de commandes étant destiné à être exploité par ladite station,
- des moyens (24) d'interprétation des commandes dudit second jeu de commandes, délivrant un second jeu de commandes interprétées,
- des premiers moyens (25) de mappage des commandes dudit premier jeu de commandes, délivrant des commandes à transmettre sur ledit canal de transfert de commandes,
* dans le sens du second standard vers le premier standard :
- des seconds moyens (26) de tri des commandes reçues sur ledit canal de transfert de commandes, délivrant un troisième jeu de commandes destiné à être transmis audit premier équipement terminal et un quatrième jeu de commandes destiné à être exploité par ladite station,
- des seconds moyens (27) de mappage des commandes dudit troisième jeu de commandes, délivrant des commandes à transmettre audit premier équipement terminal,
- des seconds moyens (28) de transcodage des données reçues sur ledit canal de transfert de données dudit second standard vers ledit premier standard, délivrant des données à transmettre audit premier équipement terminal,
- des moyens (29) de regroupement desdites commandes et desdites données à transmettre audit premier équipement terminal, de façon à les transmettre par l'intermédiaire dudit canal de transfert unique, et
* des moyens (210) de supervision de ladite communication, à partir dudit second jeu de commandes interprétées et dudit quatrième jeu de commandes, assurant notamment l'initialisation, le suivi et l'interruption de ladite communication.

2. Station selon la revendication 1, caractérisée en ce que lesdits moyens de supervision (210) génèrent des commandes (236, 237) destinées à être transmises sur ledit canal de transfert unique et ou sur ledit canal de transfert de commandes, en fonction dudit second jeu de commandes interprétées, dudit quatrième jeu de commandes et d'informations externes.

3. Station selon l'une quelconque des revendications 1 et 2, caractérisé en ce que lesdits moyens de sélection (113 ; 210) sélectionnent par défaut lesdits seconds moyens d'émission et de réception de signaux de parole (111), et en ce que lesdits premiers moyens d'émission et de réception de données (112) sont sélectionnés sur réception d'une demande de connexion émise par ledit premier ou ledit second équipement terminal.

4. Station selon l'une quelconque des revendications 1 à 3, caractérisé en ce que lesdits moyens de sélection (210) assurent l'émission d'une instruction spécifique (234) de validation/invalidation de certains modules de ladite station, lorsque lesdits premiers moyens d'émission et de réception de données sont sélectionnés.

5. Station selon la revendication 4, caractérisée en ce que ladite instruction spécifique de validation/invalidation assure l'invalidation d'au moins certaines touches d'un clavier.

6. Station selon l'une quelconque des revendications 1 à 5, caractérisée en ce que ledit premier standard de données est la norme V24 associée à un protocole modem.

7. Station selon l'une quelconque des revendications 1 à 6, caractérisée en ce que ledit second standard de données est la norme V110.

8. Station selon l'une quelconque des revendications 1 à 7, caractérisée en ce que ledit réseau de radiocommunication numérique est un réseau GSM.

9. Station selon l'une quelconque des revendications 1 à 8, caractérisée en ce qu'elles comprend des moyens de sélection entre au moins deux débits de données distincts pour les échanges de données selon ledit premier standard de données.

10. Station selon la revendication 9, caractérisée en ce qu'il comprend des moyens d'adaptation du format des données échangées selon ledit second standard de données, en fonction dudit débit sélectionné.

11. Station selon l'une quelconque des revendications 1 à 10, caractérisé en ce qu'il comprend des moyens (240, 241) de contrôle des flux émis et/ou reçues par ladite station.

12. Station selon l'une quelconque des revendications 1 à 11, caractérisé en ce que lesdits premiers moyens de tri (23) délivrent un cinquième jeu de commandes, destiné à configurer (243) ladite station aux besoins dudit premier équipement.

## Claims

1. Station of a digital mobile radio network for exchanging speech signals and data signals characterised in that it comprises:
- connection means to a first data processing terminal equipment (11) for bidirectional exchange of data to a first data exchange standard using a single transfer channel carrying data and commands simultaneously,
- first means (112) for sending data to and receiving data from a second data processing terminal equipment via said mobile radio network according to a second data exchange standard using a data transfer channel and a command transfer channel,
- second means (111) for sending speech signals to and receiving speech signals from a remote terminal via said mobile radio network according to a third data exchange standard, and
means for monitoring a bidirectional call between said station and a remote terminal comprising:
- means (113, 210) for selecting either said first or said second transmitting and receiving means according to whether said call carries data or a speech signal,
- interface means between said first and second data exchange standards comprising:
* in the direction from the first standard to the second standard:
- means (21) for separating data and commands delivered by said first terminal equipment,
- first transcoding means (22) for transcoding said data delivered by said separator means from said first standard to said second standard and delivering data to be transmitted on said data transfer channel,
- first sorting means (23) for sorting said commands into two sets of commands, a first set of commands to be transmitted to said second terminal equipment and a second set of commands to be executed by said station,
- means (24) for interpreting commands of said second set of commands and delivering a second set of interpreted commands,
- first mapping means (25) for mapping commands of said first set of commands and delivering commands to be transmitted on said command transfer channel,
* in the direction from the second standard towards the first standard:
- second sorting means (26) for sorting commands received on said command transfer channel and delivering a third set of commands to be transmitted to said first terminal equipment and a fourth set of commands to be executed by said station,
- second mapping means (27) for mapping commands of said third set of commands and delivering commands to be transmitted to said first terminal equipment,
- second transcoding means (28) for transcoding data received on said data transfer channel from said second standard to said first standard and delivering data to be transmitted to said first terminal equipment,
- means (29) for grouping said commands and said data to be transmitted to said first terminal equipment in order to transmit them over said single transfer channel, and
* means (210) for supervising said call from said second set of interpreted commands and said fourth set of commands and handling initialisation, monitoring and interruption of said call.

2. Station according to claim 1 characterised in that said supervisor means (210) generate commands (236, 237) to be transmitted on said single transfer channel and/or said command transfer channel according to said second set of interpreted commands, said fourth set of commands and external information.

3. Station according to claim 1 or claim 2 characterised in that said selector means (113; 210) select said second speech signal transmit and receive means (111) by default and said first data transmit and receive mans (112) are selected on reception of a call request sent by said first or said second terminal equipment.

4. Station according to any one of claims 1 to 3 characterised in that said selector means (210) send a specific instruction (234) to enable/disable certain modules of said station when said first data transmit and receive means are selected.

5. Station according to claim 4 characterised in that said specific enabling/disabling instruction disables at least some keys of a keypad.

6. Station according to any one of claims 1 to 5 characterised in that said first data standard is the V.24 standard associated with a modem protocol.

7. Station according to any one of claims 1 to 6 characterised in that said second data standard is the V.110 standard.

8. Station according to any one of claims 1 to 7 characterised in that said digital mobile radio network is a GSM network.

9. Station according to any one of claims 1 to 8 characterised in that it comprises means for selecting between at least two different data bit rates for exchanges of data to said first data standard.

10. Station according to claim 9 characterised in that it comprises means for adapting the format of the data exchanged according to said second data standard depending on said bit rate selected.

11. Station according to any one of claims 1 to 10 characterised in that it comprises means (240, 241) for controlling the flows sent and/or received by said station.

12. Station according to any one of claims 1 to 11 characterised in that said first sorting means (23) deliver a fifth set of commands for configuring (243) said station to suit the requirements of said first equipment.

## Patentansprüche

1. Station eines digitalen Funkkommunikationsnetzes, die zum einen Austäusche von Sprachsignalen und zum anderen von Datensignalen erlaubt, dadurch gekennzeichnet, daß sie umfaßt:
- Verbindungsmittel zum Verbinden mit einer ersten Datenendeinrichtung (11) die bidirektionale Austäuche von Daten gemäß einem ersten Datenaustauschstandard erlauben, wobei der erste Datenstandard einen einzigen Transferkanal benutzt, der zugleich Daten und Befehle befördert,
- erste Sende-/Empfangsmittel zum Senden und Empfangen von Daten (112) zu/von einer zweiten Datenendeinrichtung über das Funkkommunikationsnetz gemäß einem zweiten Datenaustauschstandard, der zum einen einen Datentransferkanal und zum anderen einen Befehlstransferkanal benutzt,
- zweite Sende-/Empfangsmittel zum Senden und Empfangen von Sprachsignalen (111) zu/von einer fernen Endeinrichtung über das Funkkommunikationsnetz gemäß einem dritten Datenaustauschstandard, und
Steuermittel zum Steuern einer bidirektionalen Kommunikation zwischen der Station und einer fernen Endeinrichtung, umfassend:
- Wahlmittel (113, 210) zum Wählen zwischen den ersten und den zweiten Sende- und Empfangsmitteln, je nachdem, ob die Kommunikation Daten oder ein Sprachsignal trägt,
- Schnittstellenmittel zur Herstellung von Schnittstellen zwischen dem ersten und dem zweiten Datenaustausch standard, die umfassen:
* in Richtung vom ersten Standard zum zweiten Standard:
- Trennmittel (21) zum Trennen der von der ersten Endeinrichtung abgegeben Daten und Befehle,
- erste Umkodiermittel (22) zum Umkodieren der von den Trennmitteln abgegebenen Daten vom ersten Standard auf den zweiten Standard, die Daten zum Übertragen auf den Datentransferkanal abgeben,
- erste Sortiermittel (23) zum Sortieren der Befehle in zwei Befehlssätze, wobei ein erster Befehlssatz dazu bestimmt ist, zu der zweiten Endeinrichtung übertragen zu werden, und ein zweiter Befehlssatz dazu bestimmt ist, von der Station ausgewertet zu werden,
- Interpretiermittel (24) zum Interpretieren der Befehle des zweiten Befehlssatzes, die einen zweiten Satz von interpratierten Befehlen abgeben,
- erste Umsetzmittel (25) zum Umsetzen der Befehle des ersten Befehlssatzes, die auf den Befehlstransferkanal zu übertragende Befehle abgeben,
* in Richtung vom zweiten Standard zum ersten Standard:
- zweite Sortiermittel (26) zum Sortieren der auf dem Befehlstransferkanal empfangenen Befehle, die einen dritten Befehlssatz, der dazu bestimmt ist, zu der ersten Endeinrichtung übertragen zu werden, und einen vierten Befehlssatz, der dazu bestimmt ist, von der Station ausgewertet zu werden, abgeben,
- zweite Umsetzmittel (27) zum Umsetzen der Befehle des dritten Befehlssatzes, die zu der ersten Endeinrichtung zu übertragende Befehle abgeben,
- zweite Umkodiermittel (28) zum Umkodieren der auf dem Datentransferkanal empfangenen Daten vom zweiten Standard auf den ersten Standard, die zu der ersten Endeinrichtung zu übertragende Daten abgeben,
- Zusammenfassungsmittel (29) zum Zusammenfassen der zu der ersten Endeinrichtung zu übertragenden Befehle und Daten, so daß sie über den einzigen Transferkanal übertragen werden, und
* Überwachungsmittel (210) zum Überwachen der Kommunikation ausgehend von dem zweiten Satz der interpretierten Befehl und dem vierten Befehlssatz, die insbesondere die Initialisierung, die Verfolgung und die Unterbrechung der Kommunikation gewährleisten.

2. Station nach Anspruch 1, dadurch gekennzeichnet, daß die Überwachungsmittel (210) Befehle (236, 237) erzeugen, die dazu bestimmt sind, auf dem einzigen Transferkanal und/oder auf den Befehlstransferkanal übertragen zu werden, in Funktion des zweiten interpretierten Befehlssatzes, des vierten Befehlssatzes und externer Informationen.

3. Station nach einem der Ansprüche 1 und 2, dadurch gekennzeichnet, daß die Wahlmittel (113; 210) defaultmäßig die zweiten Sprachsignal-Sende-/empfangsmittel (111) auswählen und daß die ersten Daten-Sende-/empfangsmittel (112) auf den Empfang einer von der ersten oder der zweiten Endeinrichtung gesendeten Verbindungsanfrage hin gewählt werden.

4. Station nach einem der Ansprüche 1 bis 3, dadurch gekennzeichnet, daß die Wahlmittel (210) das Senden einer spezifischen Anweisung (234) zum Validieren/Invalidieren von bestimmten Modulen der Station gewährleisten, wenn die ersten Daten-Sende-/empfangsmittel ausgewählt sind.

5. Station nach Anspruch 4, dadurch gekennzeichnet, daß die spezifische Anweisung zum Validieren/Invalidieren die Invalidierung von wenigstens bestimmter Tasten einer Tastatur gewährleistet.

6. Station nach einem der Ansprüche 1 bis 5, dadurch gekennzeichnet, daß der erste Datenstandard die Norm V24 in Verbindung mit einem Modemprotokoll ist.

7. Station nach einem der Ansprüche 1 bis 6, dadurch gekennzeichnet, daß der zweite Datenstandard die Norm V110 ist.

8. Station nach einem der Ansprüche 1 bis 7, dadurch gekennzeichnet, daß das digitale Funkkommunikationsnetz ein GSM-Netz ist.

9. Station nach einem der Ansprüche 1 bis 8, dadurch gekennzeichnet, daß sie Wahlmittel zum Wählen zwischen wenigstens zwei unterschiedlichen Datendurchsätzen für die Datenaustäusche gemäß dem ersten Datenstandard umfaßt.

10. Station nach Anspruch 9, dadurch gekennzeichnet, daß sie Mittel zum Anpassen des Formates der ausgetauschten Daten gemäß einem zweiten Datenstandard in Funktion des ausgewählten Durchsatzes umfaßt.

11. Station nach einem der Ansprüche 1 bis 10, dadurch gekennzeichnet, daß sie Steuermittel (240, 241) zum Steuern der von der Station gesendeten und/oder empfangenen Flüsse umfaßt.

12. Station nach einem der Ansprüche 1 bis 11, dadurch gekennzeichnet, daß die ersten Sortiermittel (23) einen fünften Befehlssatz abgeben, der dazu bestimmt ist, die Station nach den Bedürfnissen der ersten Einrichtung zu konfigurieren (243).
